Europäisches Patentamt

European Patent Office

Office européen des brevets

(19)

(11) Numéro de publication: **0 069 672**
**B1**

## (12) FASCICULE DE BREVET EUROPEEN

(45) Date de publication du fascicule du brevet:
**29.10.86**

(21) Numéro de dépôt: **82401264.5**

(22) Date de dépôt: **06.07.82**

(51) Int. Cl.⁴: **B 65 D 21/02, G 11 B 23/02**

(54) **Plateau empilable pour l'emballage d'articles et pile constituée de tels plateaux.**

(30) Priorité: **08.07.81 FR 8113418**

(43) Date de publication de la demande:
**12.01.83 Bulletin 83/2**

(45) Mention de la délivrance du brevet:
**29.10.86 Bulletin 86/44**

(84) Etats contractants désignés:
**AT CH DE GB LI NL**

(56) Documents cités:
**DE - A - 2 351 392**
**FR - A - 2 288 371**
**FR - A - 2 373 854**
**US - A - 3 685 646**
**US - A - 4 201 353**

(73) Titulaire: **KODAK-PATHE, 8-26, rue Villiot, F-75580 Paris Cedex 12 (FR)**

(72) Inventeur: **Nonnenmacher, Gilles, Kodak-Pathe 30, rue des Vignerons BP 60, F-94302 Vincennes Cedex (FR)**

(74) Mandataire: **Lecas, Jean, Kodak-Pathé Département Brevets et Licences Centre de Recherches et de Technologie Zone Industrielle, F-71102 Chalon-sur-Saône Cédex (FR)**

## Description

La présente invention est relative à un plateau empilable pour l'emballage d'articles, plus particulièrement d'articles plats tels que, par exemple, des galettes de produits en bande comprenant un fond propre à recevoir un article et des rebords périphériques perpendiculaires au fond. Elle concerne aussi une pile de tels plateaux, formée pour l'expédition de groupes d'articles. Un plateau empilable du type ci-dessus indiqué est, par exemple, décrit dans le document FR-A-2 373 854.

Les cassettes d'enregistrement sonore ou «vidéo» du commerce sont garnies en usine de bandes magnétiques, sur des machines alimentées avec des galettes de bandes magnétiques de grandes longueurs. Ces galettes sont elles-mêmes formées sur d'autres machines, qui découpent une bande magnétique de grande largeur en bandes de plus petite largeur et qui enroulent ces dernières bandes sur des noyaux pour former les galettes. Ces galettes, dépourvues de joues, sont des produits fragiles qu'il convient de transporter avec beaucoup de soin, bien souvent d'une usine à une autre, le garnissage des cassettes s'opérant souvent dans des usines autres que celles où sont réalisées les galettes de bandes magnétiques.

On redouble de précaution quand il s'agit de conditionner pour le transport des galettes de bandes magnétiques de 12,7 mm de largeur, destinées à des cassettes «vidéo» car il s'agit là d'un produit particulièrement coûteux.

Pour protéger ces galettes, on connaît un plateau empilable en polystyrène comportant un fond et un rebord périphérique continu, des bossages centraux débordant d'un côté et de l'autre du fond pour assurer par imbrication le blocage en rotation des plateaux d'une pile de tels plateaux, ce qui est favorable à la cohérence de la pile. Cependant, celle-ci ne peut reposer de manière stable sur le plateau inférieur de la pile, du fait de la position centrale et de la faible surface des bossages qui débordent vers le bas du fond de ce plateau. En outre, l'imbrication des seuls bossages n'assure pas une solidarisation parfaite de deux plateaux adjacents empilés. Egalement, si le rebord périphérique protège la surface périphérique de la galette, il gêne la prise en main de cette galette par sa tranche.

La présente invention a donc pour but de réaliser un plateau empilable, conçu de manière à permettre la formation d'une pile cohérente et stable, protégeant parfaitement la tranche des articles supportés par les plateaux de la pile, sans que soit gêné la prise en main de ces articles par la tranche lorsqu'on les retire des plateaux de la pile ou qu'on les y installe.

On atteint ce but de l'invention avec un plateau empilable caractérisé en ce que les rebords débordent de part et d'autre du fond suivant des contours périphériques complémentaires découpés de manière à dégager une partie de la périphérie de la face du fond qui reçoit l'article et à assurer l'imbrication des rebords adjacents de deux plateaux contigus empilés l'un sur l'autre, pour enfermer complétement l'article placé entre ces deux plateaux.

Ainsi, les parois complémentaires de deux plateaux adjacents dans une pile ferment complètement l'espace situé entre ces plateaux, espace où un article se trouve donc parfaitement protégé. En outre, l'imbrication des rebords de ces plateaux empêche la rotation d'un plateau par rapport à l'autre ce qui est favorable à la cohésion de la pile.

Au dessin annexé, donné seulement à titre d'example:

– la figure 1 est une vue en perspective d'un plateau empilable suivant la présente invention,

– la figure 2 est une vue en perspective d'une pile de plateaux conformes à celui de la figure 1, et

– les figures 3 et 5 sont des vues perspectives de deux autres modes de réalisation du plateau suivant l'invention, et les figures 4 et 6 sont des vues perspectives de piles de plateaux conformes à ceux des figures 3 et 5, respectivement.

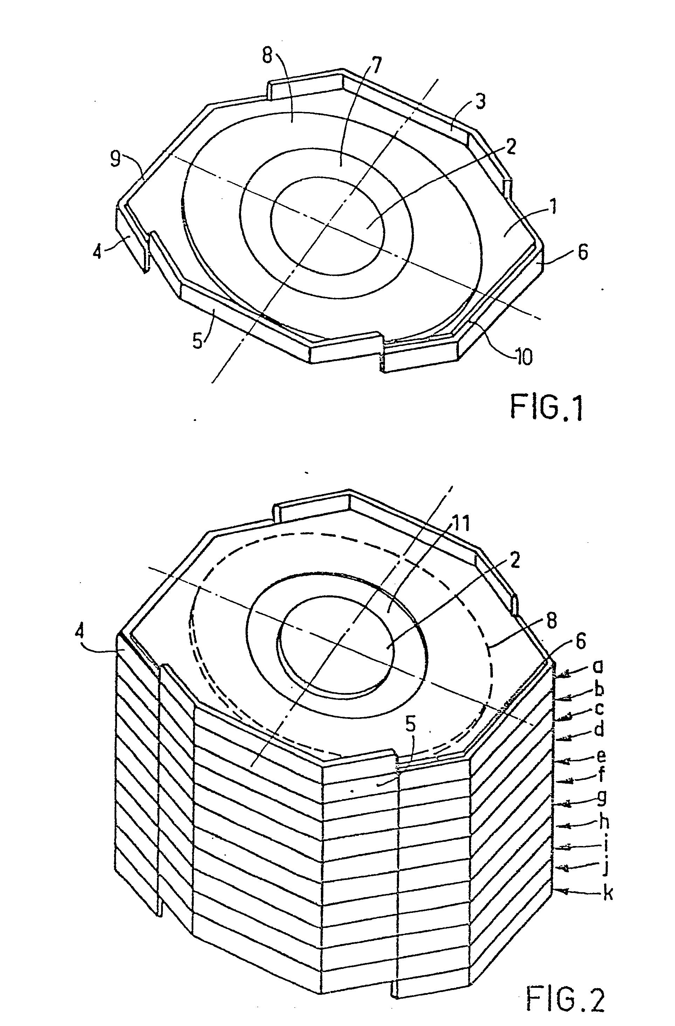

Le plateau représenté à la figure 1 comprend un fond 1 octogonal du centre duquel déborde un bossage tel qu'un centreur 2 circulaire. Dans le mode de réalisation représenté du plateau suivant l'invention, destiné à recevoir une galette de bande magnétique 8, ce centreur est d'un diamètre légèrement inférieur à celui de l'alésage central du noyau 7 sur lequel la bande de la galette est enroulée, de manière à passer dans cet alésage pour immobiliser la galette sur le plateau.

Des rebords 3, 4, 5 et 6 débordent de la périphérie du plateau, perpendiculairement au fond. Ces rebords sont de forme, de hauteur et de longueur identiques. Chacun des quatre rebords occupe le quart de la périphérie du fond. Il est constitué de trois parties contigues. La partie centrale suit un côté entier du fond alors que chacune des deux parties latérales ne suit que la moitié du côté du fond dont elle déborde. Cette forme de rebord renforce la rigidité du plateau.

Du point de vue de la figure 1, les rebords 3 et 5 sont formés du côté de la face supérieure du plateau tandis que les rebords 4 et 6 sont formés du côté de la face inférieure de ce plateau. Deux rebords contigus débordent respectivement de part et d'autre du fond.

Des rainures périphériques peu profondes, telles que les rainures 9 et 10 de la face du fond qui est visible sur la figure 1, sont formées sur les deux faces du fond pour servir d'assises aux rebords des plateaux adjacents dans une pile de tels plateaux. Ces rainures améliorent aussi l'étanchéité de l'espace délimité par deux plateaux adjacents, grâce à la chicane ainsi formée.

Une gorge circulaire 11 entoure le centreur 2. Elle permet de recevoir une galette de bande dont le noyau déborde du plan des spires de la bande.

Du fait de la complémentarité des contours périphériques supérieur et inférieur du plateau de la figure 1, il est possible d'empiler de tels plateaux. Lorsqu'on superpose deux plateaux en repérage, par exemple les plateaux a et b de la pile de la figure 2, les rebords supérieurs 3 et 5 du plateau b s'encastrent entre les rebords inférieurs 4 et 6 du plateau a. Comme le contour périphérique inférieur du plateau a est identique au contour périphérique supérieur du plateau b, l'encastrement est parfait, sans jeu. Ainsi, les fonds des plateaux a et b, les rebords inférieurs 4 et 6 du plateau a et les rebords supérieurs 3 et 5 du plateau b, délimitent ensemble une cavité complètement fermée propre à protéger une galette de bande préalablement déposée sur le fond du plateau b, comme représenté en trait interrompu sur la figure 2.

Pour former la pile de la figure 2, on place sur un premier plateau k une galette de bande puis on lui superpose un deuxième plateau j et on répète ces opérations jusqu'au plateau a qui protége la galette placée sur le plateau b.

On remarquera que l'agencement alterné des rebords des plateaux, qui permet leur imbrication dans la pile, empêche la rotation des plateaux les uns par rapport aux autres. La stabilité de la pile en est fortement accrue. Il s'agit là d'une caractéristique importante de l'invention.

L'agencement alterné des rebords permet aussi de dégager un accès vers la tranche de la galette, au-dessus des rebords 4 et 6. Le dépôt ou le retrait manuel d'une galette en est facilité.

On remarquera aussi que le plateau k, par lequel la pile repose sur un support horizontal, soutient la pile verticalement grâce au large et stable appui constitué par les deux rebords inférieurs 4 et 6 de ce plateau. Le plateau de la technique antérieure mentionné dans le préambule de la présente demande, à blocage en rotation par bossages centraux, ne permet pas d'atteindre ce résultat. En effet, ces bossages débordent du centre du plateau, au-dessus et au-dessous de celui-ci. Une pile de tels plateaux reposerait alors sur le bossage central du plateau inférieur de la pile. Du fait de sa position centrale, ce bossage ne saurait assurer la stabilité de la pile qui repose sur lui. Il faut alors prévoir un plateau de forme spéciale pour la base de la pile. Au contraire, et avantageusement, la présente invention permet de former une pile stable de n + 1 plateaux identiques, protégeant n galette de bandes.

Il faut remarquer que la forme octogonale du plateau représenté au dessin permet de former une pile qui est fermement maintenue par les parois de la boîte en carton de section carrée dans laquelle on la glisse pour expédition, grâce au contact complet de quatre des huit côtés de chaque plateau avec ces parois. De ce point de vue, une forme inscriptible dans un carré ou un rectangle est préférable à la forme circulaire que semblerait commander celle de la galette de bande.

Pour soulever la pile entière, il convient que les plateaux soient aussi solidarisés axialement. Pour cela on peut placer la pile dans un sac, ou bien lier les plateaux avec une bande qui entoure la pile en passant sur le plateau supérieur et sous le plateau inférieur.

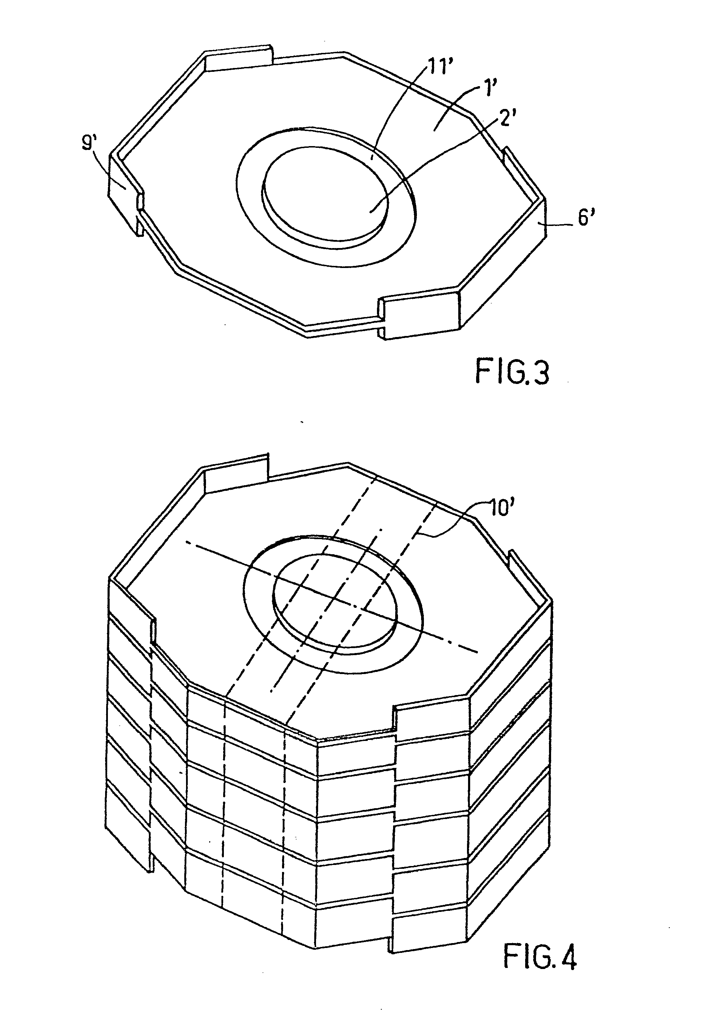

A cet égard, les modes de réalisation du plateau suivant l'invention qui sont représentés aux figures 3 à 6 comprennent des formes avantageuses.

En effet, si on revient à la figure 2, il est clair qu'une bande enveloppant la pile dans un plan axial passera toujours sur deux rebords. La tension de la bande sur ces rebords peut endommager ceux-ci, ou bien elle oblige à prévoir des rebords renforcés.

Pour pallier cet inconvénient, le plateau suivant l'invention peut prendre, par exemple, l'une des formes représentées aux figures 3 et 6 où les mêmes nombres, affectés d'un «prime», repèrent des parties similaires à celles du plateau de la figure 1.

Le plateau de la figure 3 se déduit de celui de la figure 1 par une rotation d'un quart de tour des rebords 3 et 5, qui se superposent alors aux rebords 6 et 4 pour former les rebords 6' et 9'. Ceux-ci débordent également de part et d'autre du fond 1' du plateau.

Comme il est clair sur la figure 4, on forme une pile de tels plateaux en les posant les uns sur les autres après avoir fait tourner chaque plateau d'un quart de tour par rapport à celui qui le reçoit. Il est clair aussi qu'une bande de serrage 10' (représentée en trait interrompu) peut entourer la pile sans s'appuyer sur un rebord en porte-à-faux et donc sans risquer de détériorer le plateau supérieur ou le plateau inférieur.

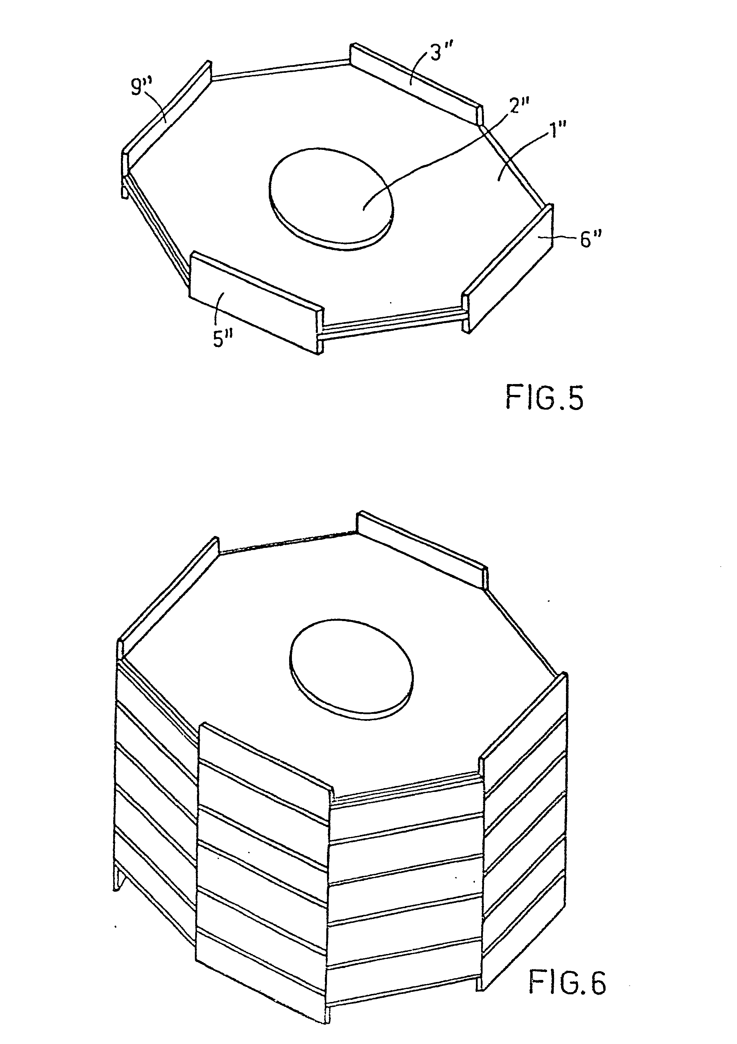

Le plateau de la figure 5 présente aussi cette caractéristique. Quatre rebords 3'', 5'', 6'', 9'' débordent symétriquement du fond 1'' du plateau, sur quatre côtés du fond octogonal. Chaque rebord est adjacent à deux côtés sans rebords.

Pour empiler de tels plateaux (figure 6), on pose les plateaux les uns sur les autres après avoir fait tourner chaque plateau d'un huitième de tour par rapport à celui qui le reçoit. Il est clair qu'une bande peut entourer la pile dans un plan axial sans s'appuyer sur un rebord, tout comme pour la pile de la figure 4.

Par contre, les rebords du plateau de la figure 1, qui s'étendent sur toute la périphérie du fond, assurent un raidissement de ce fond plus efficace que celui obtenu avec les rebords des plateaux des figures 3 et 5, rebords qui ne s'étendent pas sur toute la périphérie de ces plateaux.

On remarquera que les rebords des plateaux des figures 1, 3 et 5 s'étendent, de part et d'autre du fond, sur la moitié de la périphérie du fond. Ces trois plateaux présentent un axe de symétrie perpendiculaire à leur fond. Cette caractéristique permet l'empilage des plateaux des figures 3 et 5, empilage qui implique un décalage angulaire de deux plateaux consécutifs d'un angle $\dfrac{\pi}{m}$, m représentant le nombre de rebords qui débordent de chaque côté du plateau.

Chaque plateau peut être réalisé dans une très grande variété de matériaux. Des matériaux moulables tels que le polystyrène expansé, léger et antichoc, conviennent particulièrement bien.

Il est clair qu'on pourrait choisir de nombreux autres agencements et formes pour les rebords périphériques du plateau, sans sortir du cadre de l'invention, pour autant que soit reprise la complémentarité des contours des rebords supérieurs et inférieurs du plateau. Parmi tous les agencements de rebords possible, il est clair aussi que les agencements symétriques par rapport à un plan axial d'une pile, présentent l'avantage de donner une meilleure assise à cette pile.

Bien entendu, l'invention n'est pas limitée aux modes de réalisation décrits et représentés. Par exemple, les plateaux pourraient prendre des formes autres qu'octogonale, par exemple carrée, rectangulaire, circulaire, etc. L'invention englobe aussi des plateaux dépourvus d'axe de symétrie ou même de toute symétrie. A titre d'exemple, un tel plateau peut présenter le contour d'un polygone irrégulier et un agencement de rebords alternés du type de celui du plateau de la figure 1.

## Revendications

1. Plateau empilable pour l'emballage d'articles, comprenant un fond (1, 1', 1'') propre à recevoir un article (8) et des rebords périphériques perpendiculaires au fond, caractérisé en ce que ces rebords débordent de part et d'autre du fond (1, 1', 1'') suivant des contours périphériques complémentaires découpés de manière à dégager une partie de la périphérie de la face du fond (1, 1', 1'') qui reçoit l'article (8) et à assurer l'imbrication des rebords adjacents de deux plateaux contigus empilés l'un sur l'autre, pour enfermer complètement l'article (8) placé entre ces deux plateaux.

2. Plateau conforme à la revendication 1, caractérisé en ce que deux rebords consécutifs sur la périphérie du plateau débordent de part et d'autre du fond (1, 1', 1'') du plateau.

3. Plateau conforme à la revendication 1, caractérisé en ce que les rebords débordent de part et d'autre du fond (1, 1', 1''), des mêmes parties de la périphérie du fond.

4. Plateau conforme à la revendication 1, caractérisé en ce qu'il présente un axe de symétrie perpendiculaire au plan du fond.

5. Plateau conforme à la revendication 4, caractérisé en ce que les rebords qui débordent de chacun des deux côtés du fond s'étendent sur la moitié de la périphérie du fond (1, 1', 1'').

6. Plateau conforme à l'une quelconque des revendications précédentes, caractérisé en ce que les rebords suivent des parties non rectilignes de la périphérie du plateau.

7. Plateau conforme à l'une quelconque des revendications précédentes, caractérisé en ce que la hauteur des rebords est constante.

8. Plateau conforme à l'une quelconque des revendications précédentes, caractérisé en ce que tous les rebords présentent la même forme.

9. Plateau conforme à l'une quelconque des revendications précédentes, caractérisé en ce que le fond présente un contour polygonal inscriptible dans un carré ou un rectangle.

10. Plateau conforme à l'une quelconque des revendications précédentes, caractérisé en ce qu'un bossage (2, 2', 2'') débordant du fond coopère avec l'article reçu sur le plateau pour l'empêcher de glisser sur le fond.

11. Pile de n plateaux conforme à la revendication 1, caractérisé en ce que les rebords de ces plateaux s'imbriquent de manière à délimiter n–1 cavités situées chacune entre deux fonds de plateaux adjacents et fermées latéralement par les rebords imbriqués des plateaux.

12. Pile conforme à la revendication 11, de plateaux conformes à la revendication 2, caractérisé en ce que les plateaux sont empilés les uns sur les autres dans la même orientation.

13. Pile conforme à la revendication 11, de plateaux conformes aux revendications 3 et 4, caractérisée en ce que les plateaux adjacents sont coaxiaux et décalés d'un angle $\frac{\pi}{m}$, m étant le nombre de rebords débordant de chacun des côtés du fond d'un plateau.

14. Pile conforme à l'une quelconque des revendications 11 à 13, de plateaux conformes à la revendication 9, caractérisée en ce qu'elle définit un volume présentant des faces propres à venir en appui contre les parois d'une boîte d'emballage protégeant la pile.

15. Pile conforme à l'une quelconque des revendications 11 à 14, caractérisée en ce qu'une bande de serrage enveloppe la pile de manière à retenir les plateaux les uns contre les autres.

16. Pile conforme à l'une quelconque des revendications 11 à 14, caractérisée en ce qu'elle est protégée par un sac retenant les plateaux les uns contre les autres.

## Claims

1. Stackable tray for packaging articles, comprising a bottom (1, 1', 1'') adapted to receive an article (8) and peripheral walls perpendicular to the bottom, characterized in that such walls protrude from both sides of the bottom (1, 1', 1'') along complementary peripheral outlines cut in such a manner as to clear a portion of the periphery of the bottom (1, 1', 1'') which receives the article (8) and to ensure the interdigitation of the adjacent walls of two contiguous trays stacked on one another, to completely enclose the article (8) placed between these two trays.

2. Tray according to claim 1, characterized in that two consecutive walls on the periphery of the tray protrude from both sides of the bottom (1, 1', 1'') of the tray.

3. Tray according to claim 1, characterized in that the walls protrude from both sides of the bottom (1, 1', 1''), from the same parts of the periphery of the bottom.

4. Tray according to claim 1, characterized on that it has a symmetry axis perpendicular to the plane of the bottom.

5. Tray according to claim 4, characterized in that the walls that protrude from each of the two sides of the bottom extend on the half of the periphery of the bottom (1, 1', 1'').

6. Tray according to any of the above claims, characterized in that the walls follow non-rectilinear portions of the periphery of the tray.

7. Tray according to any of the above claims, characterized in that the height of the walls is constant.

8. Tray according to any of the above claims, characterized in that all the walls have the same shape.

9. Tray according to any the above claims, characterized in that the bottom has a polygonal outline which can be inscribed in a square or a rectangle.

10. Tray according to any of the above claims, characterized in that a boss (2, 2', 2'') protruding from the bottom cooperates with the article received on the tray to prevent it from sliding on the bottom.

11. Stack of n trays according to claim 1, characterized in that the walls of such trays interdigitate so as to define n–I recesses located each between two bottoms of adjacent trays and closed laterally by the interdigitated walls of the trays.

12. Stack according to claim 11, of trays according to claim 2, characterized in that the trays are stacked on one another in the same orientation.

13. Stack according to claim 11, of trays according to claim 3 ans 4, characterized in that the adjacent trays are coaxial and angularly displaced of an angle $\pi/m$, m being the number of walls protruding from each of the sides of the bottom of the tray.

14. Stack according to any of claims 11 to 13, of trays according to claim 9, characterized in that it defines a volume having sides adapted to abut the walls of a packaging box protecting the stack.

15. Stack according to any claims 11 to 14, characterized in that a tightening strip surrounds the stack so as to hold the trays against one another.

16. Strack according to any of claims 11 to 14, characterized in that it is protected by a bag holding the trays against one another.

**Patentansprüche**

1. Stapelbarer Verpackungsbehälter mit einem Bodenteil (1, 1', 1'') für die Aufnahme eines Artikels (8) und mit senkrecht vom Rand des Bodenteils hochragenden Wandteilen, dadurch gekennzeichnet, dass sich die Wandteile auf beiden Seiten des Bodenteils längs komplementärer Umrisslinien erstrecken, die so geformt sind, dass ein Teil des seitlichen Randes des Bodenteils (1, 1', 1''), der den Artikel (8) aufnimmt, frei bleibt, und dass das Ineinandergreifen der benachbarten Wandteile zweier aneinanderstossender, übereinander gestapelter Behälter gewährleistet ist, damit der zwischen den beiden Behältern befindliche Artikel (8) völlig umschlossen ist.

2. Behälter nach Anspruch 1, dadurch gekennzeichnet, dass zwei auf dem Umfang des Behälters aufeinanderfolgende Wandteile jeweils aus entgegengesetzten Seiten des Bodenteils (1, 1', 1'') des Behälters herausragen.

3. Behälter nach Anspruch 1, dadurch gekennzeichnet, dass die Wandteile aus beiden Seiten des Bodenteils (1, 1', 1'') und immer aus den gleichen Bereichen des Umfangs des Bodenteils herausragen.

4. Behälter nach Anspruch 1, dadurch gekennzeichnet, dass der Behälter eine Symmetrieachse besitzt, welche sich senkrecht zur Ebene des Bodenteils erstreckt.

5. Behälter nach Anspruch 4, dadurch gekennzeichnet, dass die Wandteile, die jeweils aus beiden Seiten des Bodenteils herausragen, sich über die Hälfte des Randes des Bodenteils (1, 1', 1'') erstrecken.

6. Behälter nach einem der vorhergehenden Ansprüche, dadurch gekennzeichnet, dass die Wandteile in ihrer Form nicht geradlinigen Bereichen des Umfangs des Behälters entsprechen.

7. Behälter nach einem der vorhergehenden Ansprüche, dadurch gekennzeichnet, dass die Höhe der Wandteile konstant ist.

8. Behälter nach einem der vorhergehenden Ansprüche, dadurch gekennzeichnet, dass alle Wandteile die gleiche Form haben.

9. Behälter nach einem der vorhergehenden Ansprüche, dadurch gekennzeichnet, dass das Bodenteil einen vieleckigen Umriss hat, der in ein Quadrat oder ein Rechteck passt.

10. Behälter nach einem der vorhergehenden Ansprüche, dadurch gekennzeichnet, dass eine sich vom Bodenteil erstreckende Nabe (2, 2', 2'') mit dem im Behälter befindlichen Artikel so zusammenwirkt, dass ein Verschieben des Artikels auf dem Bodenteil verhindert wird.

11. Stapel von n Behältern nach Anspruch 1, dadurch gekennzeichnet, dass die Wandteile der Behälter so ineinandergreifen, dass n–1 Aussparungen entstehen, die jeweils zwischen zwei Bodenteilen benachbarter Behälter liegen und seitlich von den ineinandergreifenden Wandteilen der Behälter abgeschlossen werden.

12. Stapel nach Anspruch 11 von Behältern nach Anspruch 2, dadurch gekennzeichnet, dass die Behälter in gleicher Ausrichtung übereinander gestapelt sind.

13. Stapel nach Anspruch 11 von Behältern nach Anspruch 3 und 4, dadurch gekennzeichnet, dass die benachbarten Behälter koaxial und in einem Winkel von $\pi/m$ versetzt sind, wobei m die Anzahl der Wandteile bedeutet, die aus jeder Seite des Bodenteils des Behälters herausragen.

14. Stapel nach einem der Ansprüche 11 bis 13 von Behältern nach Anspruch 9, dadurch gekennzeichnet, dass der Stapel einen Körper bildet mit Seitenwänden, die an die Wände einer den Stapel schützenden Verpackungskiste stossen.

15. Stapel nach Anspruch 11 bis 14, dadurch gekennzeichnet, dass ein Befestigungsband den Stapel umgibt, damit die Behälter zusammengehalten werden.

16. Stapel nach einem der Ansprüche 11 bis 14, dadurch gekennzeichnet, dass er von einer Hülle geschützt ist, die die Behälter zusammenhält.

FIG.1

FIG.2

0 069 672

FIG.3

FIG.4

FIG.5

FIG.6

11